# EUROPEAN PATENT APPLICATION

(11) **EP 4 800 876 A1**
(43) Date of publication of application: **02.09.2026**
(21) Application number: 24915081.4
(22) Date of filing: 10.12.2024
(51) Int. Cl.: H02J 7/00

(54) **ENERGY EQUALIZATION SYSTEM AND ENERGY STORAGE SYSTEM**

(30) Priority: 02.01.2024 CN 202410008089
(71) Applicant: Huawei Digital Power Technologies Co., Ltd., Shenzhen, Guangdong 518043 (CN)
(72) Inventor: YE, Wanxiang, Shenzhen, Guangdong 518043 (CN); LI, Ping, Shenzhen, Guangdong 518043 (CN); YU, Shijiang, Shenzhen, Guangdong 518043 (CN); WEI, Chong, Shenzhen, Guangdong 518043 (CN)
(74) Representative: Gill Jennings & Every LLP
(86) International application number: PCT/CN2024/138241
(87) International publication number: WO 2025/145866

(57) **Abstract**

This application provides an energy balancing system and an energy storage system. The energy balancing system is disposed outside an energy storage apparatus. The energy balancing system includes at least two balancing circuits. In a same time period, a first balancing circuit is configured to perform discharging processing on a first energy storage unit, and a second balancing circuit is configured to perform charging processing on a second energy storage unit, to implement energy balancing between energy storage units in the energy storage apparatus. In addition, a switching switch circuit disposed in the energy balancing system can implement sharing of a balancing circuit between energy storage units, thereby improving utilization of the balancing circuit and reducing energy balancing costs. Moreover, in the energy balancing system, a large-power balancing circuit is used to replace a balancing module disposed in each energy storage unit, so that energy balancing costs can be reduced, balancing power can be increased, and a balancing time can be shortened.

## Description

### CROSS-REFERENCE TO RELATED APPLICATIONS

This application claims priority to Chinese Patent Application No. 202410008089.X, filed with the China National Intellectual Property Administration on January 2, 2024 and entitled "ENERGY BALANCING SYSTEM AND ENERGY STORAGE SYSTEM", which is incorporated herein by reference in its entirety.

### TECHNICAL FIELD

This application relates to the field of energy technologies, and in particular, to an energy balancing system and an energy storage system.

### BACKGROUND

Currently, a scale of an energy storage system is gradually expanding. In a mainstream commercial energy storage system, a single battery cluster usually needs more than 400 cells connected in series. In addition, a capacity of a single cell has exceeded 300 Ah. During a design of the energy storage system, because the single battery cluster has a large capacity and a heavy weight, an integrator of the energy storage system usually divides the single battery cluster into a plurality of battery packs (packs) for design. A capacity of a battery pack is affected by discreteness of a factory capacity of a cell, process deviation, temperature control deviation between battery packs, and a difference between cell attenuation rates. During application, a battery capacity of the battery cluster is affected by a battery pack with a weakest state of health (state of health, SOH), accelerating capacity attenuation of the battery cluster. Therefore, in the industry, an active balancing module at a cell level or a battery pack level is added to reduce impact of a weakest battery pack and improve a discharge capacity of a battery cluster in a life cycle. In a current active balancing solution, an active balancing module is added to each battery pack or each cell, utilization of an active balancing function of the active balancing module is low, and energy balancing costs are high.

### SUMMARY

This application provides an energy balancing system and an energy storage system, to improve utilization of an active balancing function and reduce energy balancing costs.

According to a first aspect, an embodiment of this application provides an energy balancing system, including a first balancing circuit, a second balancing circuit, a first switching switch circuit, a second switching switch circuit, and a balancing busbar. The first switching switch circuit is connected to a first side of the first balancing circuit, and a second side of the first balancing circuit is connected to the balancing busbar. The second switching switch circuit is connected to a first side of the second balancing circuit, and a second side of the second balancing circuit is connected to the balancing busbar. Both the first switching switch circuit and the second switching switch circuit are configured to connect to positive electrodes and negative electrodes of energy storage units connected in series in the energy storage apparatus. During active energy balancing, the first switching switch circuit is configured to connect a positive electrode and a negative electrode of a first energy storage unit to the first side of the first balancing circuit, so that the first balancing circuit performs discharging processing on the first energy storage unit; and the second switching switch circuit is configured to connect a positive electrode and a negative electrode of a second energy storage unit to the first side of the second balancing circuit, so that the second balancing circuit performs charging processing on the second energy storage unit.

In this application, the energy balancing system is disposed outside the energy storage apparatus. The energy balancing system includes at least two balancing circuits. In a same time period, the first balancing circuit is configured to perform discharging processing on the first energy storage unit, and the second balancing circuit is configured to perform charging processing on the second energy storage unit, to implement energy balancing between the energy storage units in the energy storage apparatus. In addition, a switching switch circuit disposed in the energy balancing system can implement sharing of a balancing circuit between energy storage units, thereby improving utilization of the balancing circuit and reducing energy balancing costs. Moreover, in the energy balancing system, a large-power balancing circuit is used to replace a balancing module disposed in each energy storage unit, so that energy balancing costs can be reduced, balancing power can be increased, and a balancing time can be shortened.

In some embodiments of this application, to achieve energy balancing effect, an average SOC value of the energy storage units may be used as a target SOC value. An SOC value of the first energy storage unit is greater than the target SOC value, that is, the first energy storage unit is any energy storage unit whose SOC value is greater than the target SOC value, and an SOC value of the second energy storage unit is less than the target SOC value, that is, the second energy storage unit is any energy storage unit whose SOC value is less than the target SOC value. The first balancing circuit is used to use a part of energy that is in the first energy storage unit and that is greater than the target SOC value to charge the second energy storage unit, to achieve energy balancing effect.

In some embodiments of this application, the energy balancing system may further include a balancing controller. The balancing controller is configured to: control on and off states of the first switching switch circuit and the second switching switch circuit, control a discharging state of the first balancing circuit, and control a charging state of the second balancing circuit. Specifically, the balancing controller may control the first switching switch circuit to connect a positive electrode and a negative electrode of a discharging energy storage unit to the first side of the first balancing circuit, and control the second switching switch circuit to connect a positive electrode and a negative electrode of a charging energy storage unit to the second balancing circuit. The first energy storage unit is any energy storage unit, in the energy storage apparatus, whose SOC value is greater than the target SOC value, and the second energy storage unit is any energy storage unit, in the energy storage apparatus, whose SOC value is less than the target SOC value. The balancing controller may further control the first balancing circuit to perform discharging processing on the first energy storage unit, and control the second balancing circuit to perform charging processing on the second energy storage unit.

In this embodiment of this application, the first switching switch circuit specifically includes a plurality of pairs of first switches, and a quantity of pairs of first switches is the same as a quantity of energy storage units. One side of a pair of first switches is connected to a positive output end and a negative output end of a corresponding energy storage unit, and the other side of the pair of first switches is connected to a positive electrode and a negative electrode of the first side of the first balancing circuit. In a same time period, a pair of first switches is turned on, and other pairs of first switches are turned off. The first balancing circuit discharges, to the balancing busbar, electric energy of the first energy storage unit connected to the turned-on first switches. Similarly, the second switching switch circuit includes a plurality of pairs of second switches, and a quantity of pairs of second switches is the same as the quantity of energy storage units. One side of a pair of second switches is connected to a positive output end and a negative output end of a corresponding energy storage unit, and the other side of the pair of second switches is connected to a positive electrode and a negative electrode of the first side of the second balancing circuit. In a same time period, a pair of second switches is turned on, and other pairs of second switches are turned off. The second balancing circuit uses electric energy on the balancing busbar to charge the second energy storage unit connected to the turned-on second switches.

In some embodiments of this application, when SOC values of a plurality of energy storage units in the energy storage apparatus are all greater than the target SOC value, it may be considered that there are a plurality of energy storage units that need to be discharged in the energy storage apparatus. When SOC values of a plurality of energy storage units in the energy storage apparatus are all less than the target SOC value, it may be considered that there are a plurality of energy storage units that need to be charged in the energy storage apparatus.

In this embodiment of this application, in a discharging process for energy balancing, in a same time period, the first switching switch circuit is connected to only a positive electrode and a negative electrode of one energy storage unit, namely, the first energy storage unit. Therefore, the first balancing circuit performs discharging processing on only one energy storage unit, namely, the first energy storage unit. When a difference between the SOC value of the first energy storage unit and the target SOC value is less than a first threshold, it indicates that energy of the first energy storage unit has reached a balancing standard, and the first switching switch circuit may switch to connect a positive electrode and a negative electrode of another energy storage unit, namely, the third energy storage unit, to the first side of the first balancing circuit, so that the first balancing circuit performs discharging processing on the third energy storage unit. An SOC value of the third energy storage unit is greater than the target SOC value.

In some embodiments of this application, in the foregoing discharging process for energy balancing, a discharging priority of the energy storage units may be determined based on differences between the target SOC value and the SOC values of the energy storage units. For example, a larger difference between an SOC value of an energy storage unit and the target SOC value indicates a higher discharging priority of the energy storage unit. In other words, the energy storage unit undergoes an energy balancing operation preferentially. That is, in the foregoing process, the difference between the SOC value of the first energy storage unit and the target SOC value is greater than a difference between the SOC value of the third energy storage unit and the target SOC value. Therefore, the first balancing circuit preferentially performs discharging processing on the first energy storage unit.

After all energy storage units whose SOC values are greater than the target SOC value are discharged until differences between the SOC values and the target SOC value are less than the first threshold, it indicates that energy balancing for all these energy storage units is completed. In this case, the first switching switch circuit may switch to an off state, that is, the first switching switch circuit does not connect any energy storage unit to the first side of the first balancing circuit.

In this embodiment of this application, in a charging process for energy balancing, in a same time period, the second switching switch circuit is connected to only a positive electrode and a negative electrode of one energy storage unit, namely, the second energy storage unit. Therefore, the second balancing circuit performs charging processing on only one energy storage unit, namely, the second energy storage unit. When a difference between the SOC value of the second energy storage unit and the target SOC value is less than a second threshold, it indicates that energy of the second energy storage unit has reached the balancing standard, and the second switching switch circuit may switch to connect a positive electrode and a negative electrode of another energy storage unit, namely, a fourth energy storage unit, to the first side of the second balancing circuit, so that the second balancing circuit performs charging processing on the fourth energy storage unit. An SOC value of the fourth energy storage unit is less than the target SOC value, and the second threshold may be the same as or different from the first threshold. This is not limited herein.

In some embodiments of this application, in the foregoing charging process for energy balancing, a charging priority of the energy storage units may be determined based on the differences between the target SOC value and the SOC values of the energy storage units. For example, a larger difference between an SOC value of an energy storage unit and the target SOC value indicates a higher charging priority of the energy storage unit. In other words, the energy storage unit undergoes an energy balancing operation preferentially. That is, in the foregoing process, the difference between the SOC value of the second energy storage unit and the target SOC value is greater than a difference between the SOC value of the fourth energy storage unit and the target SOC value. Therefore, the second balancing circuit preferentially performs discharging processing on the second energy storage unit.

After all energy storage units whose SOC values are less than the target SOC value are charged until differences between the SOC values and the target SOC value are less than the second threshold, it indicates that energy balancing for all these energy storage units is completed. In this case, the second switching switch circuit may switch to an off state, that is, the second switching switch circuit does not connect any energy storage unit to the first side of the second balancing circuit.

In some other embodiments of this application, if there are a large quantity of energy storage units connected in series in the energy storage apparatus connected to the energy balancing system, to improve active balancing power and active balancing efficiency, a quantity of balancing circuits can be appropriately increased in the energy balancing system.

For example, the energy balancing system may include a plurality of first balancing circuits and a plurality of first switching switch circuits, and the first switching switch circuits and the first balancing circuits are disposed in a one-to-one correspondence. In a time period during active balancing, to improve active balancing power and active balancing efficiency, the balancing controller can simultaneously control different first switching switch circuits to connect positive electrodes and negative electrodes of different discharging energy storage units to first sides of corresponding first balancing circuits, and control the corresponding first balancing circuits to perform discharging processing on the different first energy storage units. For example, during active balancing, two first switching switch circuits may be respectively used to respectively connect two first balancing circuits to two different first energy storage units, and the two first balancing circuits may simultaneously discharge electric energy stored in the two first energy storage units to the balancing busbar. In another time period during active balancing, if required active balancing power and efficiency are low, the balancing controller may alternatively control only one first switching switch circuit to connect a positive electrode and a negative electrode of one discharging energy storage unit to a first side of one first balancing circuit, and control one first balancing circuit to perform discharging processing on one first energy storage unit.

For example, the energy balancing system may include a plurality of second balancing circuits and a plurality of second switching switch circuits, and the second switching switch circuits and the second balancing circuits are disposed in a one-to-one correspondence. In a time period during active balancing, to improve active balancing power and active balancing efficiency, the balancing controller may simultaneously control different second switching switch circuits to connect positive electrodes and negative electrodes of different charging energy storage units to first sides of corresponding second balancing circuits, and control the corresponding second balancing circuits to perform charging processing on the different first energy storage units. For example, during active balancing, two second switching switch circuits may be respectively used to respectively connect two second balancing circuits to two different second energy storage units, and the two second balancing circuits may simultaneously discharge electric energy stored in the two second energy storage units to the balancing busbar. In another time period during active balancing, if required active balancing power and efficiency are low, the balancing controller may alternatively control only one second switching switch circuit to connect a positive electrode and a negative electrode of one charging energy storage unit to a first side of one second balancing circuit, and control one second balancing circuit to perform charging processing on one second energy storage unit.

In this application, to simplify charging and discharging management control logic of the balancing controller for different energy storage units, a quantity of first balancing circuits included in the energy balancing system is usually the same as a quantity of second balancing circuits.

In some embodiments of this application, the first balancing circuit and the second balancing circuit may include a unidirectional DCDC circuit. In other words, the first balancing circuit implements only a discharging function, and the second balancing circuit implements only a charging function. Alternatively, in some other embodiments of this application, the first balancing circuit and the second balancing circuit may alternatively include a bidirectional DCDC circuit. That is, functions of the first balancing circuit and the second balancing circuit may be interchanged, to implement the discharging function and the charging function.

In some embodiments of this application, the energy balancing system may be specifically configured as a balancing control box independent of the energy storage apparatus.

In some other embodiments of this application, an energy storage controller, that is, a battery control unit, may be further disposed in the balancing control box, that is, the energy balancing system. The energy storage controller is configured to detect the SOC values of the energy storage units, and specifically, may sample a state of charge by using a battery sampling unit disposed in each energy storage unit. The energy storage controller may determine the target SOC value based on the SOC values of the energy storage units, where the target SOC value may be specifically an average of the SOC values of the energy storage units, and the average is also referred to as a median value. The energy storage controller may control a status of the energy storage apparatus based on information such as the SOC values of the energy storage units, for example, may control the energy storage apparatus to be in a charging state, a discharging state, or a standby state. The energy storage controller may further determine the differences between the target SOC value and the SOC values of the energy storage units. When some differences are large, for example, greater than a threshold, that is, an active balancing condition is met, the energy storage controller starts an active balancing procedure. The energy storage controller determines the first energy storage unit and the second energy storage unit from the energy storage units based on the target SOC value, and delivers information about the first energy storage unit and the second energy storage unit to the balancing controller, so that the balancing controller performs an active balancing operation. The first energy storage unit is an energy storage unit whose SOC value is greater than the target SOC value, and the second energy storage unit is an energy storage unit whose SOC value is less than the target SOC value.

According to a second aspect, this application provides an energy storage system. The energy storage system may include the energy balancing system and the energy storage apparatus according to any possible design of the first aspect. The energy storage apparatus includes a plurality of energy storage units connected in series, and positive electrodes and negative electrodes of the energy storage units are respectively connected to a first switching switch circuit and a second switching switch circuit in the energy balancing system.

The energy storage system provided in this embodiment of this application may be a commercial power station energy storage system, or may be a scenario that has a battery requirement, such as an industrial and commercial energy storage system, a residential energy storage system, a power station energy storage system, or a charging station energy storage system. In addition, this application is applicable to various forms of batteries such as a lithium-ion battery, a sodium-ion battery, and a magnesium-aluminum battery.

In some embodiments of this application, the system may be applied to active balancing at a battery pack level. Correspondingly, the energy storage apparatus may be a battery cluster, and the energy storage unit is a battery pack, that is, a plurality of battery packs connected in series form a battery cluster. The energy balancing system provided in this embodiment of this application is disposed outside the battery pack, and the energy balancing system can implement energy balancing between battery packs.

In some other embodiments of this application, the system may be applied to active balancing at a cell level. Correspondingly, the energy storage apparatus may be a battery pack, and the energy storage unit is a cell, that is, a plurality of cells connected in series form a battery pack. The energy balancing system provided in this embodiment of this application is disposed outside a cell, and the energy balancing system can implement energy balancing between cells.

For technical effect that can be achieved by any possible design in the second aspect, refer to the technical effect that can be achieved by any possible design in the first aspect. Details are not described herein again. These aspects or another aspect of this application is clearer and more comprehensible in descriptions of the following embodiments.

### BRIEF DESCRIPTION OF DRAWINGS

FIG. 1 is a diagram of a structure of an energy storage system;
FIG. 2 is a diagram of a structure of a battery cluster in the conventional technology;
FIG. 3 is a diagram of a structure of energy balancing at a battery pack level in the conventional technology;
FIG. 4 is a diagram of a structure of an energy balancing system according to an embodiment of this application;
FIG. 5 is diagram of another structure of an energy balancing system according to an embodiment of this application;
FIG. 6 is a diagram of SOC values of energy storage units according to an embodiment; and
FIG. 7A and FIG. 7B are a diagram of an energy balancing process of an energy balancing system according to an embodiment.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "have", "contain", and their variants all mean "include but are not limited to", unless otherwise specifically emphasized in another manner.

In addition, same reference numerals in the figures represent same or similar structures. Therefore, repeated description thereof is omitted. Expressions of locations and directions in this application are described by using the accompanying drawings as an example. However, changes may also be made as required, and all the changes fall within the protection scope of this application. The accompanying drawings in this application are merely used to illustrate relative location relationships and do not represent an actual scale.

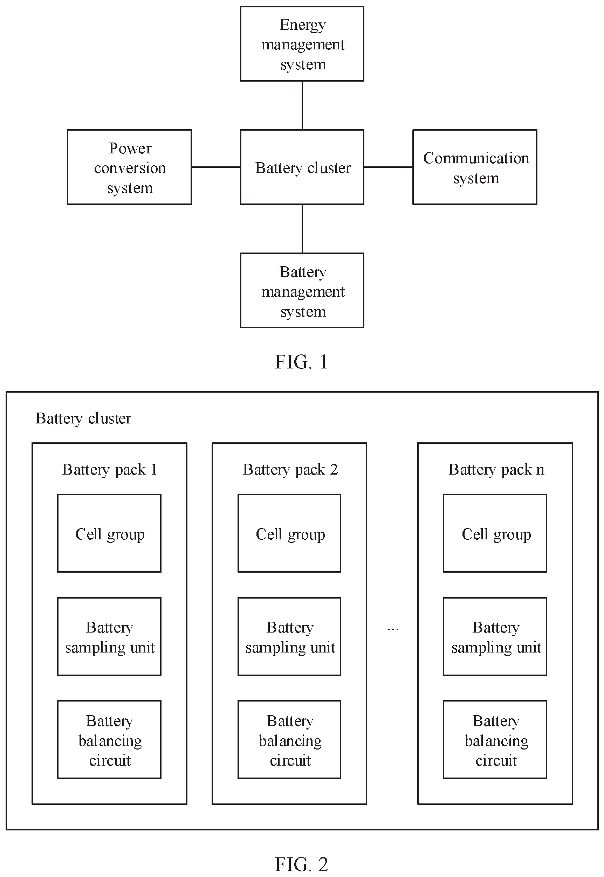

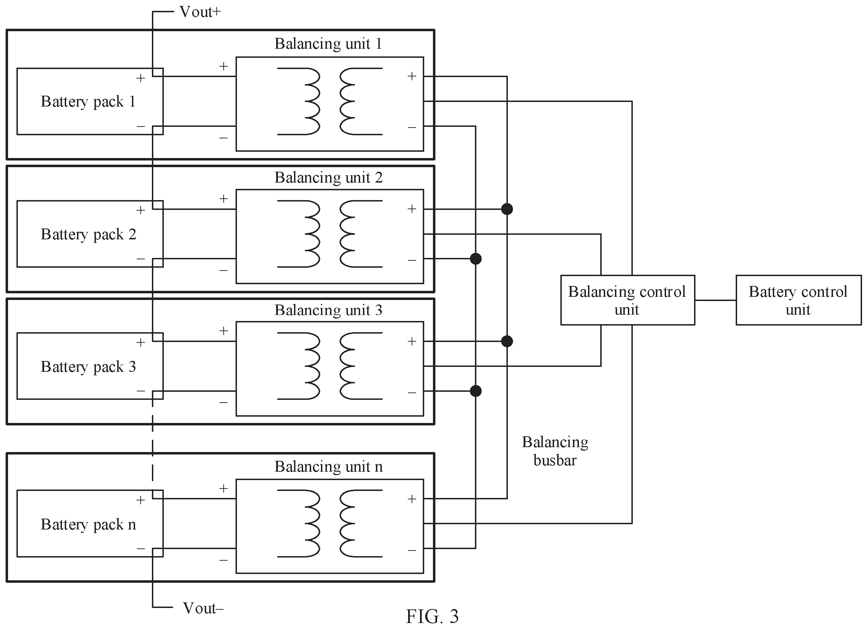

Refer to FIG. 1. An energy storage system used for industrial and commercial use or a power station usually includes core components such as a battery cluster (battery rack, BR), a battery management system (battery management system, BMS), a power conversion system, an energy management system, and a communication system. Refer to FIG. 2. The battery cluster may specifically include one or more battery packs, and the battery pack usually includes a cell group, a battery sampling unit, a battery balancing circuit, and the like. The battery sampling unit and the battery control unit may form the battery management system, and a battery control unit may control the battery sampling unit to sample a state of charge of the cell group. For battery packs having different states of health (state of health, SOH) and states of charge (state of charge, SOC) in the battery cluster, to implement a purpose that the battery packs can be fully charged or fully discharged at the same time, energy balancing between the battery packs needs to be performed, and this part of work is completed by the battery balancing circuit. Refer to FIG. 3. A current active balancing solution at a battery pack level is as follows: A balancing unit (that is, the battery balancing circuit) is added in each battery pack. When the battery control unit determines, based on SOC values that are of cell groups in battery packs and that are obtained by using battery sampling units, that energy balancing is required between the battery packs, a balancing control unit controls a balancing unit in a battery pack with a high state of charge to discharge to a balancing busbar and controls a balancing unit in a battery pack with a low SOC to draw electricity from the balancing busbar. Finally, SOCs of the battery packs are relatively consistent, and the battery packs are fully charged or fully discharged at the same time, so that utilization of the battery cluster is maximized.

The current active balancing solution at the battery pack level has the following disadvantages: 1. A balancing unit is deployed in a battery pack. During use of the battery pack in a life cycle, SOH and SOC differences between the battery packs are not obvious in middle and early stages of use. Therefore, most balancing units do not work in the middle and early stages of an energy storage system, and resources are wasted to some extent. 2. If a balancing unit does not work for a long time, reliability problems such as component aging and circuit aging may occur. 3. A balancing unit is affected by a quantity of battery packs. As the quantity of battery packs increases, costs increase, and return on investment is low. 4. A current energy storage system mainly uses liquid cooling. When a balancing unit in a battery pack is faulty, a waterproof housing needs to be opened to replace the balancing unit. This causes heavy maintenance workload and brings a sealing risk.

To improve utilization of an active balancing function and reduce energy balancing costs, this application provides an energy balancing system and an energy storage system. The following describes in detail the energy balancing system and the energy storage system provided in this application with reference to the accompanying drawings.

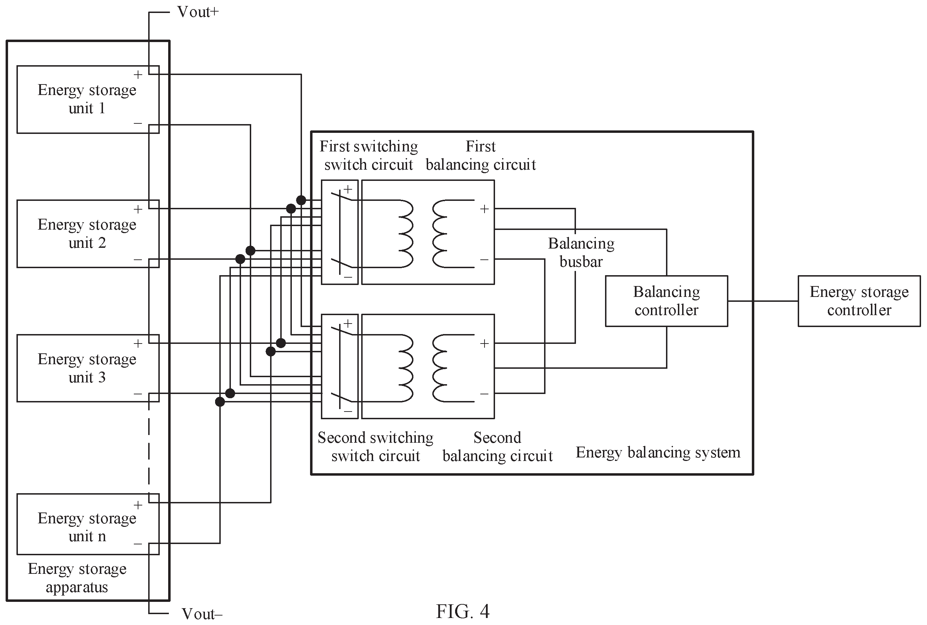

Refer to FIG. 4. In an embodiment of this application, the energy balancing system includes a first balancing circuit, a second balancing circuit, a first switching switch circuit, a second switching switch circuit, and a balancing busbar. The first switching switch circuit is connected to a first side of the first balancing circuit, and a second side of the first balancing circuit is connected to the balancing busbar. The second switching switch circuit is connected to a first side of the second balancing circuit, and a second side of the second balancing circuit is connected to the balancing busbar. Both the first switching switch circuit and the second switching switch circuit are configured to connect to positive electrodes and negative electrodes of energy storage units connected in series in the energy storage apparatus. During active energy balancing, the first switching switch circuit is configured to connect a positive electrode and a negative electrode of a first energy storage unit to the first side of the first balancing circuit, so that the first balancing circuit performs discharging processing on the first energy storage unit; and the second switching switch circuit is configured to connect a positive electrode and a negative electrode of a second energy storage unit to the first side of the second balancing circuit, so that the second balancing circuit performs charging processing on the second energy storage unit.

In addition, to achieve energy balancing effect, an average SOC value of the energy storage units may be used as a target SOC value. An SOC value of the first energy storage unit is greater than the target SOC value, that is, the first energy storage unit is any energy storage unit whose SOC value is greater than the target SOC value, and an SOC value of the second energy storage unit is less than the target SOC value, that is, the second energy storage unit is any energy storage unit whose SOC value is less than the target SOC value. The first balancing circuit is used to use a part of energy that is in the first energy storage unit and that is greater than the target SOC value to charge the second energy storage unit, to achieve energy balancing effect.

Refer to FIG. 4. In some embodiments of this application, the energy balancing system may further include a balancing controller. The balancing controller is configured to: control on and off states of the first switching switch circuit and the second switching switch circuit, control a discharging state of the first balancing circuit, and control a charging state of the second balancing circuit. Specifically, the balancing controller may control the first switching switch circuit to connect the positive electrode and the negative electrode of the first energy storage unit to the first side of the first balancing circuit, and control the second switching switch circuit to connect the positive electrode and the negative electrode of the second energy storage unit to the second balancing circuit. The first energy storage unit is any energy storage unit, in the energy storage apparatus, whose SOC value is greater than the target SOC value, and the second energy storage unit is any energy storage unit, in the energy storage apparatus, whose SOC value is less than the target SOC value. The balancing controller may further control the first balancing circuit to perform discharging processing on the first energy storage unit, and control the second balancing circuit to perform charging processing on the second energy storage unit. For example, the balancing controller may be any one of a microprocessor (microcontroller unit, MCU), a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), and the like, or may be any one or a combination of another programmable logic device, a transistor logic device, and a hardware component.

In this application, the energy balancing system is disposed outside the energy storage apparatus. The energy balancing system includes at least two balancing circuits. In a same time period, the first balancing circuit is configured to perform discharging processing on the first energy storage unit, and the second balancing circuit is configured to perform charging processing on the second energy storage unit, to implement energy balancing between energy storage units in the energy storage apparatus. In addition, a switching switch circuit disposed in the energy balancing system can implement sharing of a balancing circuit between energy storage units, thereby improving utilization of the balancing circuit and reducing energy balancing costs. Moreover, in the energy balancing system, a large-power balancing circuit is used to replace a balancing module disposed in each energy storage unit, so that energy balancing costs can be reduced, balancing power can be increased, and a balancing time can be shortened.

In some embodiments of this application, the first balancing circuit and the second balancing circuit may include a unidirectional DCDC circuit. In other words, the first balancing circuit implements only a discharging function, and the second balancing circuit implements only a charging function. Alternatively, in some other embodiments of this application, the first balancing circuit and the second balancing circuit may alternatively include a bidirectional DCDC circuit. That is, functions of the first balancing circuit and the second balancing circuit may be interchanged, to implement the discharging function and the charging function.

In this embodiment of this application, the first switching switch circuit specifically includes a plurality of pairs of first switches, and a quantity of pairs of first switches is the same as a quantity of energy storage units. One side of a pair of first switches is connected to a positive electrode and a negative electrode of a corresponding energy storage unit, and the other side of the pair of first switches is connected to a positive electrode and a negative electrode of the first side of the first balancing circuit. In a same time period, a pair of first switches is turned on, and other pairs of first switches are turned off. The first balancing circuit discharges, to the balancing busbar, electric energy of the first energy storage unit connected to the turned-on first switches. Similarly, the second switching switch circuit includes a plurality of pairs of second switches, and a quantity of pairs of second switches is the same as the quantity of energy storage units. One side of a pair of second switches is connected to a positive electrode and a negative electrode of a corresponding energy storage unit, and the other side of the pair of second switches is connected to a positive electrode and a negative electrode of the first side of the second balancing circuit. In a same time period, a pair of second switches is turned on, and other pairs of second switches are turned off. The second balancing circuit uses electric energy on the balancing busbar to charge the second energy storage unit connected to the turned-on second switches.

In some embodiments of this application, when SOC values of a plurality of energy storage units in the energy storage apparatus are all greater than the target SOC value, it may be considered that there are a plurality of energy storage units that need to be discharged in the energy storage apparatus. When SOC values of a plurality of energy storage units in the energy storage apparatus are all less than the target SOC value, it may be considered that there are a plurality of energy storage units that need to be charged in the energy storage apparatus.

In this embodiment of this application, in a discharging process for energy balancing, in a same time period, the first switching switch circuit is connected to only a positive electrode and a negative electrode of one energy storage unit, namely, the first energy storage unit. Therefore, the first balancing circuit performs discharging processing on only one energy storage unit, namely, the first energy storage unit. When a difference between the SOC value of the first energy storage unit and the target SOC value is less than a first threshold, it indicates that energy of the first energy storage unit has reached a balancing standard, and the first switching switch circuit may switch to connect a positive electrode and a negative electrode of another energy storage unit, namely, the third energy storage unit, to the first side of the first balancing circuit, so that the first balancing circuit performs discharging processing on the third energy storage unit. An SOC value of the third energy storage unit is greater than the target SOC value.

In some embodiments of this application, in the foregoing discharging process for energy balancing, a discharging priority of the energy storage units may be determined based on differences between the target SOC value and the SOC values of the energy storage units. For example, a larger difference between an SOC value of an energy storage unit and the target SOC value indicates a higher discharging priority of the energy storage unit. In other words, the energy storage unit undergoes an energy balancing operation preferentially. That is, in the foregoing process, the difference between the SOC value of the first energy storage unit and the target SOC value is greater than a difference between the SOC value of the third energy storage unit and the target SOC value. Therefore, the first balancing circuit preferentially performs discharging processing on the first energy storage unit.

After all energy storage units whose SOC values are greater than the target SOC value are discharged until differences between the SOC values and the target SOC value are less than the first threshold, it indicates that energy balancing for all these energy storage units is completed. In this case, the first switching switch circuit may switch to an off state, that is, the first switching switch circuit does not connect any energy storage unit to the first side of the first balancing circuit.

In this embodiment of this application, in a charging process for energy balancing, in a same time period, the second switching switch circuit is connected to only a positive electrode and a negative electrode of one energy storage unit, namely, the second energy storage unit. Therefore, the second balancing circuit performs charging processing on only one energy storage unit, namely, the second energy storage unit. When a difference between the SOC value of the second energy storage unit and the target SOC value is less than a second threshold, it indicates that energy of the second energy storage unit has reached the balancing standard, and the second switching switch circuit may switch to connect a positive electrode and a negative electrode of another energy storage unit, namely, a fourth energy storage unit, to the first side of the second balancing circuit, so that the second balancing circuit performs charging processing on the fourth energy storage unit. An SOC value of the fourth energy storage unit is less than the target SOC value, and the second threshold may be the same as or different from the first threshold. This is not limited herein.

In some embodiments of this application, in the foregoing charging process for energy balancing, a charging priority of the energy storage units may be determined based on the differences between the target SOC value and the SOC values of the energy storage units. For example, a larger difference between an SOC value of an energy storage unit and the target SOC value indicates a higher charging priority of the energy storage unit. In other words, the energy storage unit undergoes an energy balancing operation preferentially. That is, in the foregoing process, the difference between the SOC value of the second energy storage unit and the target SOC value is greater than a difference between the SOC value of the fourth energy storage unit and the target SOC value. Therefore, the second balancing circuit preferentially performs discharging processing on the second energy storage unit.

After all energy storage units whose SOC values are less than the target SOC value are charged until differences between the SOC values and the target SOC value are less than the second threshold, it indicates that energy balancing for all these energy storage units is completed. In this case, the second switching switch circuit may switch to an off state, that is, the second switching switch circuit does not connect any energy storage unit to the first side of the second balancing circuit.

In some other embodiments of this application, if there are a large quantity of energy storage units connected in series in the energy storage apparatus connected to the energy balancing system, to improve active balancing power and active balancing efficiency, a quantity of balancing circuits can be appropriately increased in the energy balancing system.

For example, the energy balancing system may include a plurality of first balancing circuits and a plurality of first switching switch circuits, and the first switching switch circuits and the first balancing circuits are disposed in a one-to-one correspondence. In a time period during active balancing, to improve active balancing power and active balancing efficiency, the balancing controller can simultaneously control different first switching switch circuits to connect positive electrodes and negative electrodes of different first energy storage units to first sides of corresponding first balancing circuits, and control the corresponding first balancing circuits to perform discharging processing on the different first energy storage units. For example, during active balancing, two first switching switch circuits may be respectively used to respectively connect two first balancing circuits to two different first energy storage units, and the two first balancing circuits may simultaneously discharge electric energy stored in the two first energy storage units to the balancing busbar. In another time period during active balancing, if required active balancing power and efficiency are low, the balancing controller may alternatively control only one first switching switch circuit to connect a positive electrode and a negative electrode of one first energy storage unit to a first side of one first balancing circuit, and control one first balancing circuit to perform discharging processing on one first energy storage unit.

For example, the energy balancing system may include a plurality of second balancing circuits and a plurality of second switching switch circuits, and the second switching switch circuits and the second balancing circuits are disposed in a one-to-one correspondence. In a time period during active balancing, to improve active balancing power and active balancing efficiency, the balancing controller may simultaneously control different second switching switch circuits to connect positive electrodes and negative electrodes of different second energy storage units to first sides of corresponding second balancing circuits, and control the corresponding second balancing circuits to perform charging processing on the different second energy storage units. For example, during active balancing, two second switching switch circuits may be respectively used to respectively connect two second balancing circuits to two different second energy storage units, and the two second balancing circuits may simultaneously discharge electric energy stored in the two second energy storage units to the balancing busbar. In another time period during active balancing, if required active balancing power and efficiency are low, the balancing controller may alternatively control only one second switching switch circuit to connect a positive electrode and a negative electrode of one second energy storage unit to a first side of one second balancing circuit, and control one second balancing circuit to perform charging processing on one second energy storage unit.

In this application, to simplify charging and discharging management control logic of the balancing controller for different energy storage units, a quantity of first balancing circuits included in the energy balancing system is usually the same as a quantity of second balancing circuits.

Refer to FIG. 4. In some embodiments of this application, the energy balancing system may be specifically configured as a balancing control box independent of the energy storage apparatus.

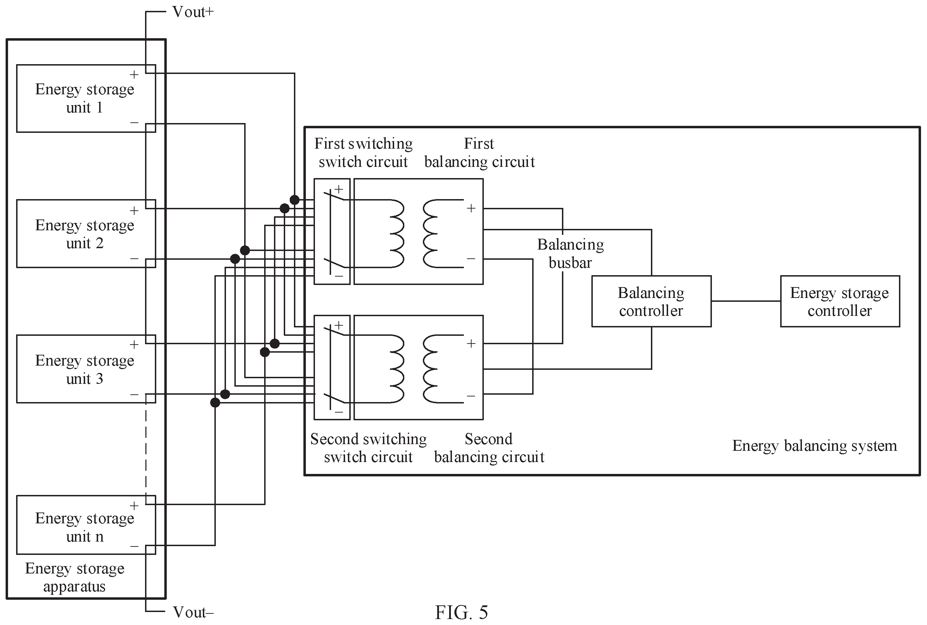

Refer to FIG. 5. In some other embodiments of this application, an energy storage controller, that is, a battery control unit, may be further disposed in the balancing control box, that is, the energy balancing system. The energy storage controller is configured to detect the SOC values of the energy storage units, and specifically, may sample a state of charge by using a battery sampling unit disposed in each energy storage unit. The energy storage controller may determine the target SOC value based on the SOC values of the energy storage units, where the target SOC value may be specifically an average of the SOC values of the energy storage units, and the average is also referred to as a median value. The energy storage controller may control a status of the energy storage apparatus based on information such as the SOC values of the energy storage units, for example, may control the energy storage apparatus to be in a charging state, a discharging state, or a standby state. The energy storage controller may further determine differences between the target SOC value and the SOC values of the energy storage units. When some differences are large, for example, greater than a third threshold, that is, an active balancing condition is met, the energy storage controller starts an active balancing procedure. The energy storage controller determines the first energy storage unit and the second energy storage unit from the energy storage units based on the target SOC value, and delivers information about the first energy storage unit and the second energy storage unit to the balancing controller, so that the balancing controller performs an active balancing operation. The first energy storage unit is an energy storage unit whose SOC value is greater than the target SOC value, and the second energy storage unit is an energy storage unit whose SOC value is less than the target SOC value.

For example, the energy controller, that is, the battery control unit, may be any one of a microprocessor (microcontroller unit, MCU), a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), and the like, or may be any one or a combination of another programmable logic device, a transistor logic device, and a hardware component.

The following describes, by using a specific embodiment, a working process of the energy balancing system provided in this application.

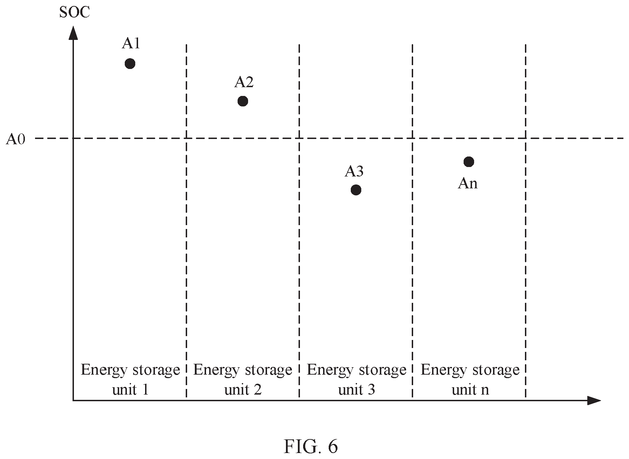

Refer to FIG. 6. An example in which the energy balancing system shown in FIG. 4 is connected to n energy storage units is used. The energy storage controller detects that SOC values of the energy storage units are different. An SOC value of an energy storage unit 1 is A1, an SOC value of an energy storage unit 2 is A2, an SOC value of an energy storage unit 3 is A3, an SOC value of an energy storage unit n is An, and a target SOC value is A0. The energy storage unit 1 may discharge to the balancing busbar through the first balancing circuit, and a total discharge capacity is A1-A0. In addition, the energy storage unit 3 may draw electricity from the balancing busbar through the second balancing circuit, and a total amount of drawn electricity is A0-A3. By analogy, the energy storage unit 2 and the energy storage unit n each draw electricity from or supply electricity to the balancing busbar based on an energy difference that needs to be balanced. In addition, an energy-balanced state may be implemented in a charging state, a standby state, or a discharging state of the energy storage apparatus.

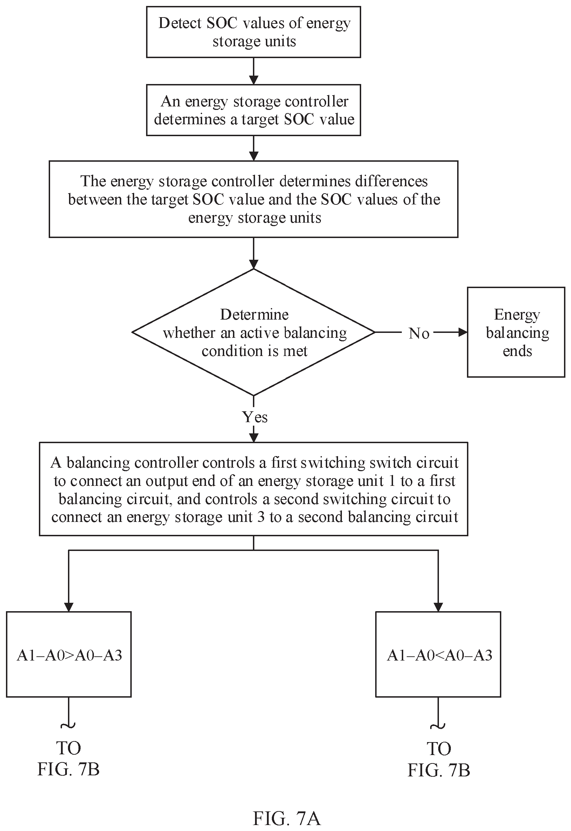

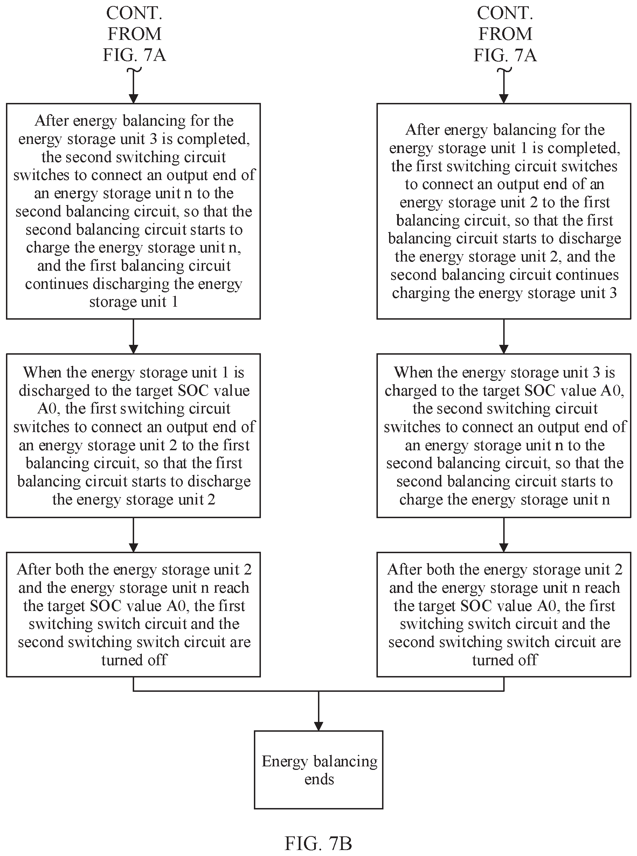

Refer to FIG. 7A and FIG. 7B. An energy balancing process of the energy balancing system is as follows.

The energy storage controller detects the SOC values of the energy storage units and determines that the target SOC value is A0, and then the energy storage controller determines differences between the target SOC value and the SOC values of the energy storage units. Whether an active balancing condition is met is determined. For example, when some differences are large, for example, greater than a third threshold, that is, the active balancing condition is met, the energy storage controller starts the active balancing procedure. The energy storage controller determines, from the energy storage units based on the target SOC value, that the energy storage unit 1 and the energy storage unit 2 are energy storage units that need to be discharged, and the energy storage unit 3 and the energy storage unit n are energy storage units that need to be charged, and delivers the foregoing information to the balancing controller.

The balancing controller controls the first switching switch circuit to connect an output end of the energy storage unit 1 to the first balancing circuit, and controls the second switching circuit to connect the energy storage unit 3 to the second balancing circuit. The first balancing circuit discharges the energy storage unit 1 by A1-A0, and the second balancing circuit charges the energy storage unit 4 by A0-A3.

When the balancing controller determines that A1-A0>A0-A3, the energy storage unit 3 completes energy balancing, that is, reaches the target SOC value, before the energy storage unit 1. After the energy storage unit 3 completes energy balancing and when the energy storage unit 1 does not complete energy balancing, the second switching circuit switches to connect an output end of the energy storage unit n to the second balancing circuit, so that the second balancing circuit starts to charge the energy storage unit n, and the first balancing circuit continues discharging the energy storage unit 1. When the energy storage unit 1 is discharged to the target SOC value A0, the first switching circuit switches to connect an output end of the energy storage unit 2 to the first balancing circuit, so that the first balancing circuit starts to discharge the energy storage unit 2. After both the energy storage unit 2 and the energy storage unit n reach the target SOC value A0, the first switching switch circuit and the second switching switch circuit are turned off to complete energy balancing.

When the balancing controller determines that A1-A0<A0-A3, the energy storage unit 1 completes energy balancing, that is, reaches the target SOC value, before the energy storage unit 3. After the energy storage unit 1 completes energy balancing and when the energy storage unit 3 does not complete energy balancing, the first switching circuit switches to connect the output end of the energy storage unit 2 to the first balancing circuit, so that the first balancing circuit starts to discharge the energy storage unit 2, and the second balancing circuit continues charging the energy storage unit 3. When the energy storage unit 3 is charged to the target SOC value A0, the second switching circuit switches to connect the output end of the energy storage unit n to the second balancing circuit, so that the second balancing circuit starts to charge the energy storage unit n. After both the energy storage unit 2 and the energy storage unit n reach the target SOC value A0, the first switching switch circuit and the second switching switch circuit are turned off to complete energy balancing.

Based on a same inventive concept, this application further provides an energy storage system. The energy storage system may include the energy balancing system and the energy storage apparatus that are provided in embodiments of this application. The energy storage apparatus includes a plurality of energy storage units connected in series. Positive electrodes and negative electrodes of the energy storage units are respectively connected to a first switching switch circuit and a second switching switch circuit in the energy balancing system.

The energy storage system provided in this embodiment of this application may be a commercial power station energy storage system, or may be a scenario that has a battery requirement, such as an industrial and commercial energy storage system, a residential energy storage system, a power station energy storage system, or a charging station energy storage system. In addition, this application is applicable to various forms of batteries such as a lithium-ion battery, a sodium-ion battery, and a magnesium-aluminum battery.

In some embodiments of this application, the system may be applied to active balancing at a battery pack level. Correspondingly, the energy storage apparatus may be a battery cluster, and the energy storage unit is a battery pack, that is, a plurality of battery packs connected in series form a battery cluster. The energy balancing system provided in this embodiment of this application is disposed outside the battery pack, and the energy balancing system can implement energy balancing between battery packs.

In some other embodiments of this application, the system may be applied to active balancing at a cell level. Correspondingly, the energy storage apparatus may be a battery pack, and the energy storage unit is a cell, that is, a plurality of cells connected in series form a battery pack. The energy balancing system provided in this embodiment of this application is disposed outside a cell, and the energy balancing system can implement energy balancing between cells.

It is clearly that a person skilled in the art can make various modifications and variations to this application without departing from the spirit and scope of this application. This application is intended to cover these modifications and variations of this application provided that they fall within the scope defined by the claims of this application and their equivalent technologies.

## Claims

1. An energy balancing system, configured to balance energy of an energy storage apparatus, wherein the energy balancing system comprises a first balancing circuit, a second balancing circuit, a first switching switch circuit, a second switching switch circuit, and a balancing busbar, wherein
the first switching switch circuit is connected to a first side of the first balancing circuit, and a second side of the first balancing circuit is connected to the balancing busbar;
the second switching switch circuit is connected to a first side of the second balancing circuit, and a second side of the second balancing circuit is connected to the balancing busbar;
both the first switching switch circuit and the second switching switch circuit are configured to connect to positive electrodes and negative electrodes of energy storage units connected in series in the energy storage apparatus; and
the first switching switch circuit is configured to connect a positive electrode and a negative electrode of a first energy storage unit to the first side of the first balancing circuit, and the second switching switch circuit is configured to connect a positive electrode and a negative electrode of a second energy storage unit to the first side of the second balancing circuit; and the first balancing circuit is configured to perform discharging processing on the first energy storage unit, and the second balancing circuit is configured to perform charging processing on the second energy storage unit.

2. The energy balancing system according to claim 1, wherein an SOC value of the first energy storage unit is greater than a target SOC value, and an SOC value of the second energy storage unit is less than the target SOC value.

3. The energy balancing system according to claim 2, wherein when a difference between the SOC value of the first energy storage unit and the target SOC value is less than a first threshold, the first switching switch circuit is configured to connect a positive electrode and a negative electrode of a third energy storage unit to the first side of the first balancing circuit, and the first balancing circuit is configured to perform discharging processing on the third energy storage unit.

4. The energy balancing system according to claim 3, wherein an SOC value of the third energy storage unit is greater than the target SOC value, and the difference between the SOC value of the first energy storage unit and the target SOC value is greater than a difference between the SOC value of the third energy storage unit and the target SOC value.

5. The energy balancing system according to any one of claims 2 to 4, wherein when a difference between the SOC value of the second energy storage unit and the target SOC value is less than a second threshold, the second switching switch circuit is configured to connect a positive electrode and a negative electrode of a fourth energy storage unit to the first side of the second balancing circuit, and the second balancing circuit is configured to perform charging processing on the fourth energy storage unit.

6. The energy balancing system according to claim 5, wherein an SOC value of the fourth energy storage unit is less than the target SOC value, and the difference between the SOC value of the second energy storage unit and the target SOC value is greater than a difference between the SOC value of the fourth energy storage unit and the target SOC value.

7. The energy balancing system according to any one of claims 1 to 6, wherein there are a plurality of first balancing circuits and a plurality of first switching switch circuits, different first switching switch circuits are configured to connect positive electrodes and negative electrodes of different first energy storage units to first sides of corresponding first balancing circuits, and the different first balancing circuits are configured to perform discharging processing on the different first energy storage units.

8. The energy balancing system according to any one of claims 1 to 7, wherein there are a plurality of second balancing circuits and a plurality of second switching switch circuits, different second switching switch circuits are configured to connect positive electrodes and negative electrodes of different second energy storage units to first sides of corresponding second balancing circuits, and the different second balancing circuits are configured to perform charging processing on the different second energy storage units.

9. The energy balancing system according to any one of claims 1 to 8, wherein the first balancing circuit and the second balancing circuit comprise a unidirectional DCDC circuit, or the first balancing circuit and the second balancing circuit comprise a bidirectional DCDC circuit.

10. The energy balancing system according to any one of claims 1 to 9, further comprising: a balancing controller, wherein the balancing controller is configured to control on and off states of the first switching switch circuit and the second switching switch circuit, control a discharging state of the first balancing circuit, and control a charging state of the second balancing circuit.

11. The energy balancing system according to any one of claims 1 to 10, further comprising: an energy storage controller, wherein the energy storage controller is configured to detect SOC values of the energy storage units, determine the target SOC value based on the SOC values of the energy storage units, and determine the first energy storage unit and the second energy storage unit from the energy storage units based on the target SOC value.

12. An energy storage system, comprising an energy storage apparatus and the energy balancing system according to any one of claims 1 to 11, wherein the energy storage apparatus comprises a plurality of energy storage units connected in series, and positive electrodes and negative electrodes of the energy storage units are respectively connected to a first switching switch circuit and a second switching switch circuit in the energy balancing system.

13. The energy storage system according to claim 12, wherein the energy storage apparatus is a battery cluster, and the energy storage units are battery packs; or the energy storage apparatus is a battery pack, and the energy storage units are cells.
